# DEMANDE DE BREVET EUROPEEN

(11) **EP 2 811 716 A1**
(43) Date de publication de la demande: **10.12.2014**
(21) Numéro de dépôt: 14171157.2
(22) Date de dépôt: 04.06.2014
(51) Int. Cl.: H04L 29/06

(54) **Procédé de gestion de file d'attente de données**

(30) Priorité: 06.06.2013 FR 1355230
(71) Demandeur: Desnoyer, Christophe, 78810 Davron (FR)
(72) Inventeur: Desnoyer, Christophe, 78810 Davron (FR)
(74) Mandataire: Casalonga

(57) **Abrégé**

Procédé de gestion d'une file d'attente de données émises par un système de traitement de données requérant (2) vers un système de traitement de données cible (1), comprenant, à la suite de l'émission des données aptes à être ajoutées à la file d'attente :
- une transmission par le système cible (1) desdites données et d'un signal de mise en attente comprenant un critère d'autorisation à satisfaire défini par le système cible (1), le signal de mise en attente étant apte à commander l'exécution d'un procédé de mise en attente,
- une mise en oeuvre dudit procédé de mise en attente par le système requérant (2) à partir de la réception du signal de mise en attente jusqu'à ce que le critère d'autorisation soit satisfait,
- un traitement par le système cible (1) des données émises par le système requérant (2) une fois le critère d'autorisation satisfait.

## Description

L'invention concerne la gestion d'une file d'attente de données informatiques notamment dans un système d'échange de données informatiques, sur un site Internet, ou dans un système de télécommunication.

L'invention traite notamment du problème de congestion des sites Internet, mais peut également s'appliquer aux problèmes de congestion dans un système de télécommunication ou tout autre échange de données informatiques où les flux doivent être régulés.

Comme tout lieu accueillant des visiteurs, virtuels ou physiques, un site Internet possède une capacité d'accueil limitée par les ressources techniques et/ou financières de mise en oeuvre. L'affluence de visiteurs sur le site Internet ne pouvant pas être contrôlée directement par le site, ce dernier est susceptible de subir une saturation.

La saturation d'un serveur Internet entraîne un ralentissement du débit de données sur le site Internet qui peut entraîner une absence de réponse du site Internet à un client internaute tentant d'accéder au site Internet, ou même une réponse erronée. Cette absence de réponse ou ces réponses erronées peuvent causer de sérieux préjudices ou problèmes en cas de transactions non terminées, de livraisons sans encaissement par exemple.

Dans les cas de lieux réels accueillant des visiteurs physiques tels que des magasins, des musées, ou des stades par exemple, il existe une solution permettant de réguler le trafic et d'ajuster l'affluence à la capacité d'accueil du lieu : les files d'attente.

Une file d'attente est généralement une structure matérielle ou immatérielle d'une ou plusieurs entrées et d'une ou plusieurs sorties destinée à stocker des entités matérielles ou immatérielles, l'entrée acceptant ces entités sans limitation autre qu'une éventuelle capacité de stockage limite, la sortie de la file d'attente n'étant autorisé qu'en fonction d'un quota, par exemple un nombre de sorties par unité de temps, constant ou variable, imposé du fait de la capacité de ce à quoi la liste d'attente donne accès, la sortie de ces entités se faisant par ordre d'entrée ou toute permutation constante de l'ordre d'entrée, avec ou sans priorité, et ce que cet ordre soit respecté de manière garantie ou approximative.

En ce sens, le terme de file d'attente recouvre indistinctement une file d'attente, une liste d'attente, une salle d'attente, une zone de stockage, une zone tampon, un buffer, ou une structure en pile entre autre, avec ou sans priorité.

Il existe des files d'attente dites « à connaissance totale » dans lesquelles la position de chacun dans la file d'attente est parfaitement connue. C'est le type de file d'attente utilisée notamment au cinéma ou dans un centre médical par exemple. Si quelqu'un abandonne sa place et sort de la file, la personne suivante avancera d'une position tout comme toutes les autres personnes suivantes. La file d'attente est auto-régulée par la collaboration entre les personnes qui attendent, ou bien elle est régulée par une autorité tierce qui sait où est chacun dans la file comme c'est le cas par exemple dans une liste d'attente de passagers en cas de surbooking d'un moyen de transport.

Il existe également des files d'attente dites « à connaissance partielle » mises en oeuvre pour la gestion de files d'attentes de personnes physiques. Dans ces types de files d'attente, personne ne connaît l'ordre exact, mais chacun dispose d'une information permettant de savoir quand son tour est arrivé. Ce type de file d'attente est utilisé notamment dans des magasins ou des administrations utilisant une file d'attente organisée à partir de tickets numérotés. Chacun est alors libre d'aller et venir comme il veut, voire de s'absenter et de revenir juste à temps quand son tour est arrivé. La file est ainsi régulée par une autorité tierce, un système de régulation, qui distribue et vérifie les tickets numérotés.

Dans le monde virtuel sur lequel les sites Internet évoluent, de telles solutions ne fonctionnent pas car elles sont sujettes à deux problèmes : le bourrage de liste et l'épuisement des ressources.

Le premier problème, le bourrage de file d'attente, est un phénomène qui se traduit de la manière suivante lors d'un échange de données de type informatique tel que sur l'Internet : les visiteurs souhaitant accéder au site Internet étant virtuels, il est possible de créer des visiteurs « fantômes », c'est-à-dire des visiteurs fictifs ne représentant pas un client physique réel utilisant un ordinateur ou tout autre type de dispositif accédant à l'Internet. Ces visiteurs « fantômes », bien que ne représentant pas une personne réelle, sont présents dans la file d'attente pour accéder au site Internet et occupent une place pour rien dans la file ; un véritable internaute, c'est-à-dire une personne physique, situé dans la file d'attente derrière des milliers d'internautes fantômes n'a alors plus aucune chance d'accéder au site Internet.

Ces entités « fantômes » qui encombrent la file d'attente pour accéder au site Internet ou bien à une page du site Internet peuvent être créées involontairement. C'est le cas par exemple lorsqu'un internaute clique à nouveau sur un lien ou un bouton permettant d'accéder à la page du site Internet désirée parce qu'il a l'impression que la demande précédente n'a pas été prise en compte. Autant de demandes d'accès supplémentaires fictives, et donc de visiteurs « fantômes », sont créées que l'internaute a cliqué de fois sur le lien ou le bouton.

Les entités « fantômes » peuvent également être créées en masse et par malveillance pour rendre le site inaccessible en pratique sans même qu'il soit nécessaire de le saturer. Les files d'attente susceptibles au bourrage de liste peuvent donc encore plus aisément être bloquées que le site qu'elles visent à protéger. C'est pourquoi elles sont rarement mises en oeuvre.

Le deuxième problème, l'épuisement des ressources, intervient pour les files d'attente à connaissance totale lorsqu'il existe un nombre trop important de demandes d'accès à un site Internet pour que les moyens mettant en oeuvre la file d'attente puissent toutes les mémoriser.

Pour les files d'attente à connaissance partielle, les moyens mettant en oeuvre la file d'attente doivent, soit garder une communication permanente avec chaque entité mise en attente pour l'appeler à son tour, ce qui consomme des ressources, de mémorisation notamment, pour chacune, soit accorder à chacune un délai réservé pour lui permettre d'entrer une fois son tour arrivé, avant de passer à la suivante. Dans les deux cas, il y a donc allocation de ressources, temporelles ou de mémoire, et donc risque de saturation de ces ressources.

Il est connu notamment des documents US 4 398 257, US 5 502 806, US 5 987 420, US 6 329 919, US 6 529 786, et US 6 889 098 des procédés de gestion de file d'attente de personnes physiques.

Il est également connu du document US 6 947 450 un procédé de gestion d'une file d'attente de données informatique dans lequel sont attribués différents degrés de priorité aux données dans la file d'attente, qui ne permet pas de résoudre les problèmes mentionnés ci-dessus.

L'invention propose un procédé de gestion de file d'attente de données informatiques utilisant une file d'attente à connaissance nulle, non ordonnée, pour réduire les problèmes d'épuisement de ressources, et un mécanisme de défi informatique pour réduire les problèmes de bourrage de file.

Selon un aspect de l'invention, il est proposé un procédé de gestion d'une file d'attente de données émises par un système de traitement de données requérant vers un système de traitement de données cible, comprenant, à la suite de l'émission des données aptes à être ajoutées à la file d'attente :
- une transmission par le système cible d'un signal de mise en attente comprenant un critère d'autorisation à satisfaire défini par le système cible, le signal de mise en attente étant apte à commander l'exécution du procédé de mise en attente défini ci-dessous,
- une mise en oeuvre dudit procédé de mise en attente par le système requérant à partir de la réception du signal de mise en attente jusqu'à ce que le critère d'autorisation soit satisfait,
- un traitement par le système cible des données émises par le système requérant une fois le critère d'autorisation d'accès satisfait.

Le système cible ne gère ainsi aucune file d'attente directement et ne mémorise aucune information relative au système requérant ou à un quelconque ordre, l'attente étant mise en oeuvre sur le système requérant en lui-même.

De préférence, avant ladite transmission, le système cible génère un identifiant transmis avec le signal de mise en attente et destiné à être mémorisé par le système requérant et renvoyé par le système requérant lors de la réémission des données.

Dans ce procédé de gestion de file d'attente de requête d'accès, chacune des entités mises en attente ne dispose que d'une information, l'identifiant, mais ignore la position des autres. Une entité correspond à un système requérant ayant émis une donnée, par exemple une donnée informatique ou une requête d'accès, destinée au système cible qui peut être un site Internet. Chaque entité mise en attente ignore même sa propre position dans la file d'attente. Même le système cible ignore quelles sont les entités qui attendent et quelle est leur position.

Le procédé de gestion de file d'attente selon la présente invention est dit de file d'attente « non ordonnée » et « à connaissance nulle ».

Un tel procédé assure alors une équité moyenne entre les entités en attente en respectant l'ancienneté de la requête dans la file d'attente et non la position.

Il ne maintient pas l'état de la file et donc celle-ci peut avoir une taille quelconque, sans aucune limite physique.

L'identifiant est mémorisé par le système requérant uniquement si bien que le système cible n'encombre pas ses moyens de mémorisation de cette information.

De préférence, l'identifiant comprend un élément horodaté. L'élément horodaté comprend la date et l'heure de génération du signal de mise en attente par le système cible.

Lorsqu'il est à nouveau présenté au système cible, cet élément horodaté permet au système cible de déterminer le temps écoulé depuis la première émission des données par le système requérant vers le système cible.

L'horodatage, avec la réalisation du critère d'autorisation, permet d'immuniser le procédé de gestion de file d'attente à la saturation des ressources.

Lorsque le critère d'autorisation est satisfait, le système cible vérifie préférentiellement l'identifiant associé aux données réémises par le système requérant et la satisfaction du critère d'autorisation, le système cible traitant les données réémises par le système requérant si le critère d'autorisation est satisfait et si l'identifiant vérifié correspond à un identifiant généré et transmis initialement par le système cible.

La vérification de l'identifiant et de la satisfaction du critère d'autorisation par le système cible permet d'éviter des actes de malveillance par exemple dus à la génération répétée de données identiques par un système requérant, l'identifiant permettant de s'assurer que le système cible a déjà placé les données du système requérant dans la file d'attente, et la satisfaction du critère d'autorisation permettant de s'assurer que le système requérant a bien réalisé un travail équivalant à une attente pendant un certain temps et d'éviter ainsi que les données soient renvoyées sans délai.

Avantageusement, le critère d'autorisation comprend un temps d'attente déterminé et adapté en comparant le débit ou la vitesse de sortie effective de la file d'attente des données à la consigne respectivement de débit ou de vitesse de sortie de la file d'attente des données.

Le temps d'attente requis peut être calculé et régulé en fonction du débit de sortie effective de la file d'attente comparé à la consigne de débit, ou en fonction des quantités inverses c'est-à-dire du délai moyen entre deux sorties effectives consécutives et de la consigne du délai entre deux sorties. Ces deux points de vue, par rapport à la vitesse et au délai entre deux sorties, sont équivalents et interchangeables.

Le procédé de régulation du temps d'attente peut être heuristique.

Ainsi, si le débit de sortie effectif est supérieur à la consigne de débit, cela signifie que l'attente est insuffisante, auquel cas on augmente le temps d'attente, par exemple linéairement en lui ajoutant une quantité constante.

Si, en revanche, le débit de sortie effectif est inférieur à la consigne de débit, cela signifie que l'attente est excessive, auquel cas on diminue le temps d'attente, par exemple exponentiellement en le réduisant d'un certain pourcentage.

La régulation du temps d'attente peut aussi être réalisée selon une régulation proportionnelle intégrale ou une régulation proportionnelle intégrale dérivée à partir du signal d'erreur constitué par l'écart entre le débit effectif et le débit consigne ou leurs quantités inverses.

Ces différentes méthodes de régulation du temps d'attente peuvent être également combinées. Selon les situations, la méthode heuristique ou le calcul direct du temps d'attente peut être utilisée.

En plus du temps d'attente, le critère d'autorisation peut comprendre avantageusement un ajustement stochastique avec une formule stochastique de la forme suivante par exemple :

Si, alors que le temps d'attente est suffisant, *x〉e^{-K(A-T)}* alors l'autorisation d'accès peut être acceptée, sinon la requête est remise en attente pour un nouveau temps d'attente.

Avec x un nombre pseudo-aléatoire compris dans l'intervalle [0;1 [ ; *K* est une constante, A est le temps d'attente effectif dans la file d'attente correspondant au temps écoulé depuis l'horodatage, et T est le temps d'attente déterminé.

Cette variante permet de réguler le temps d'attente déterminé T à un niveau inférieur au temps d'attente effectif puisque la condition d'âge A>T devient nécessaire mais non suffisante, et donc d'offrir une chance aux systèmes requérants mis en attente de bénéficier d'une diminution future du temps d'attente. Ceci améliore l'équité entre les systèmes requérants.

De préférence, entre la vérification de l'identifiant et du critère d'autorisation par le système cible et le traitement des données par le système cible, on réalise les étapes suivantes :
a) le système cible détermine un nouveau temps d'attente,
b) si le nouveau temps d'attente est inférieur au temps d'attente effectif correspondant au temps écoulé depuis l'horodatage, le système cible traite les données réémises par le système requérant,
c) sinon on renvoie les données au système requérant (2) avec un signal d'attente comportant un temps d'attente équivalant à la différence entre le nouveau temps d'attente calculé à l'étape a) et le temps d'attente effectif.

Les étapes a) à c) permettent de prolonger la mise en attente d'un système requérant lorsque l'accès au système cible ne peut pas encore être autorisé.

Avantageusement, le critère d'autorisation peut comprendre un défi informatique, également appelé preuve de travail, le système requérant transmettant en outre, une fois le critère d'autorisation satisfait, la solution du défi informatique déterminée au système cible, et la vérification par le système cible que le critère d'autorisation est satisfait comprenant la vérification de la résolution du défi informatique.

Le critère d'autorisation peut comprendre ainsi à la fois un défi technique à résoudre et un temps d'attente, ou bien uniquement l'une des deux conditions.

Comme déjà mentionné, les entités fictives dites « fantômes » peuvent être créées volontairement également, par malveillance. Par exemple, pour bloquer l'accès au site Internet voire lui causer un dommage. On parle dans ce dernier cas d'attaques « par déni de service ».

Le procédé de file d'attente est la meilleure solution pour réguler un trafic en assurant l'équité. Mais, pour que ce procédé puisse être utilisé sur l'Internet, dans un système d'échange de données de télécommunications, ou dans un système d'échanges de données où il existe un problème de bourrage de file, il faut rendre le procédé de file d'attente insensible aux entités « fantômes », c'est-à-dire l'immuniser au « *spam ».*

La résolution d'un défi par le système informatique requérant l'accès au système informatique cible permet d'immuniser le procédé de file d'attente au spam.

Avantageusement, l'identifiant peut comprendre en outre un élément d'identification unique et/ou un élément propre au système requérant.

L'élément d'identification unique permet de différencier par exemple deux mises en attente ayant le même horodatage.

L'identifiant peut comprendre en outre un élément propre au système requérant. L'élément propre au système requérant permet de lier chaque identifiant au système requérant et d'éviter une éventuelle reproduction d'un identifiant déjà utilisé par un autre système requérant. L'élément propre au système requérant peut être l'adresse IP (Internet Protocol) du navigateur ou être lié à cette adresse IP.

L'identifiant peut également comprendre une signature électronique dépendant des éléments constituant l'identifiant.

La signature électronique permet d'attester de l'authenticité de l'élément d'identification et notamment de l'indication de la date et de l'heure de réception. La signature électronique peut consister en un procédé cryptographique, avec une clef publique ou secrète ou un condensé incluant un élément secret.

Avantageusement, le système cible peut également conserver un échantillon de taille limitée de la liste des derniers identifiants utilisés ou d'un choix aléatoire parmi les derniers identifiants utilisés. Ainsi, même si un requérant réutilise massivement depuis un ordinateur client un identifiant, il sera détecté et son adresse IP sera exclue d'autorisation et exclue de la file d'attente.

Les étapes réalisées par le système cible différentes du traitement des données par le système cible peuvent avantageusement être mises en oeuvre par des moyens de régulation disposés en entrée du système cible.

Ainsi la partie du système cible propre au traitement des données émises ne traite les données qu'une fois que l'autorisation a été validée par les moyens de régulation.

Dans une variante, le signal de mise en attente peut comprendre une redirection du système requérant vers un système auxiliaire qui transmet au système requérant un programme informatique comprenant des portions de codes de logiciel pour l'exécution dudit procédé de mise en attente.

Selon un autre aspect de l'invention, il est proposé un système informatique comprenant des moyens configurés pour mettre en oeuvre le procédé de gestion de file d'attente défini ci-dessus.

Selon encore un autre aspect de l'invention, il est proposé un produit programme d'ordinateur chargeable directement dans une mémoire d'un système informatique, comprenant des portions de code de logiciel pour l'exécution du procédé de gestion de file d'attente défini ci-dessus lorsque ledit programme est exécuté sur ledit système informatique.

Selon encore un autre aspect de l'invention, il est proposé un système lisible par un système informatique, ayant des instructions exécutables par ordinateur adaptées pour provoquer l'exécution par le système informatique du procédé de gestion de file d'attente défini ci-dessus.

L'invention propose également un procédé de mise en attente d'un traitement de données par un système de traitement de données cible jusqu'à ce qu'un critère d'autorisation défini par le système cible soit satisfait, le procédé étant destiné à être mis en oeuvre sur un système de traitement de données requérant ayant émis les données à traiter par le système cible.

Selon une caractéristique générale de l'invention, le système requérant émet à nouveau lesdites données vers le système cible une fois le critère d'autorisation satisfait

De préférence, le critère d'autorisation comprend un temps d'attente. Le système requérant émet ainsi à nouveau les données à traiter par le système cible à l'expiration du temps d'attente.

Avantageusement, le critère d'autorisation d'accès peut comprendre la résolution d'un défi informatique par le système requérant.

Le système requérant peut avantageusement afficher une page d'attente jusqu'à ce que le critère d'autorisation soit satisfait. L'affichage d'une page d'attente par le système requérant permet de notifier à l'utilisateur du système requérant la mise en attente du traitement, ainsi que la fin de cette attente.

Avantageusement, l'affichage d'une page d'attente comprend un chargement périodique de message. Le chargement périodique de message permet ainsi de modifier et de varier les messages affichés sur le système requérant à destination de l'utilisateur de manière à réduire la sensation d'attente.

La page d'attente affiche de préférence des éléments comprenant des messages publicitaires fournis par un système informatique publicitaire.

Selon un autre aspect de l'invention, il est proposé un système informatique comprenant des moyens configurés pour mettre en oeuvre le procédé de mise en attente défini ci-dessus.

Selon encore un autre aspect de l'invention, il est proposé un produit programme d'ordinateur chargeable directement dans une mémoire d'un système informatique, comprenant des portions de code de logiciel pour l'exécution du procédé de gestion de mise en attente défini ci-dessus lorsque ledit programme est exécuté sur ledit système informatique.

D'autres avantages et caractéristiques de l'invention apparaîtront à l'examen de la description détaillée d'un mode de réalisation et d'un mode de mise en oeuvre, nullement limitatif, et des dessins annexés, sur lesquels :
- la figure 1 présente, de manière schématique, un système informatique configuré pour mettre en oeuvre le procédé de gestion de file d'attente selon un mode de réalisation de l'invention ;
- la figure 2 présente schématiquement un synoptique d'un procédé de gestion de file d'attente selon un mode de mise en oeuvre de l'invention ;
- la figure 3 présente schématiquement un détail de l'étape 15 de mise en attente selon un mode de mise en oeuvre de l'invention.

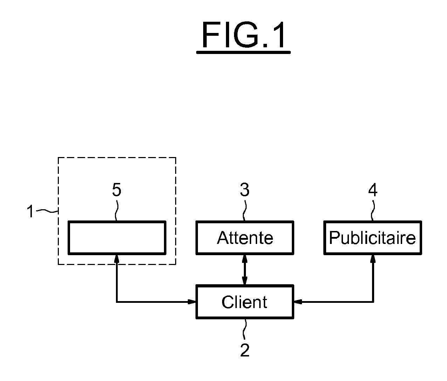

Sur la figure 1, est représenté de manière schématique un système informatique configuré pour mettre en oeuvre le procédé de gestion de file d'attente données émises par un système informatique requérant 2, ou client, vers un système informatique cible 1 selon un mode de réalisation de l'invention. Dans ce mode de réalisation les données émises par le système requérant 2 correspondent à une requête d'accès à un site Internet ou une page d'un site Internet mis en oeuvre par le système cible 1.

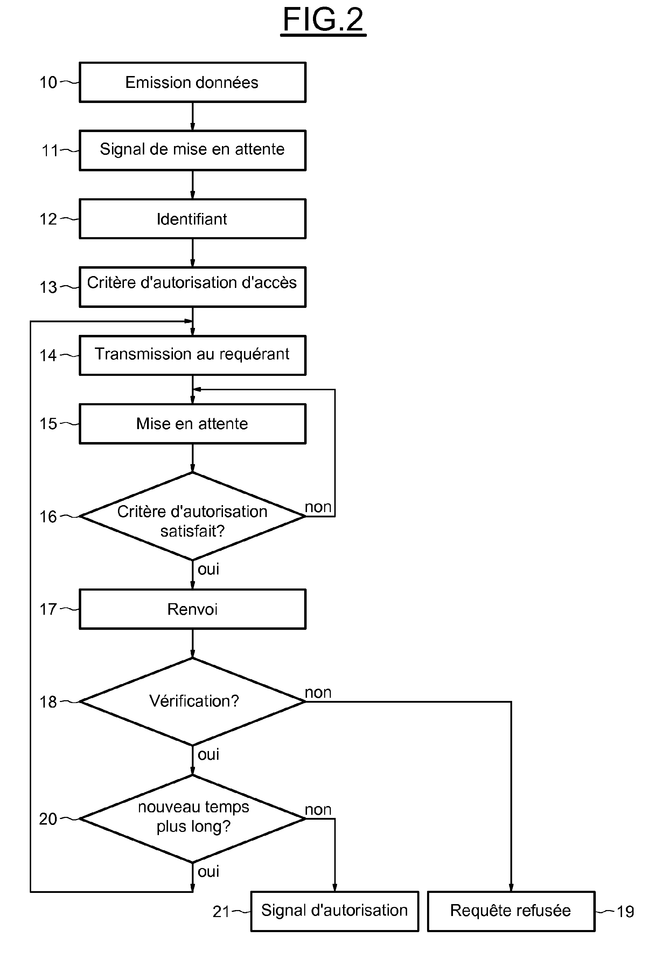

La figure 2 est un synoptique d'un procédé de gestion de file d'attente selon un mode de mise en oeuvre de l'invention, le procédé étant mis en oeuvre par le système de la figure 1.

Dans une première étape 10, un client commande un système informatique requérant 2 tel qu'un ordinateur connecté à l'Internet pour émettre une requête d'accès à un site Internet ou une page d'un site Internet mis en oeuvre sur l'Internet par le système informatique cible 1 qui peut être un serveur Internet.

Le système cible 1 comprend, dans ce mode de réalisation, des moyens de régulation 5 en entrée aptes à gérer le flux de requête d'accès en entrée.

Ainsi, si les moyens de régulation du système cible 1 sont surchargés par un grand nombre de requête d'accès au site Internet et ne peuvent autoriser l'accès à la page tout de suite, les moyens de régulation 5 du système cible 1 génèrent, dans une étape 11, un signal de mise en attente à transmettre au système requérant 2, ainsi que, dans une étape 12, un identifiant comprenant un élément d'identification unique, l'adresse IP du système requérant 2, un horodatage, c'est-à-dire la date et l'heure de génération de l'identifiant, et une signature électronique. Dans une étape 13, les moyens de régulation 5 génèrent également un critère d'autorisation d'accès.

Dans une étape suivante 14, l'identifiant et le critère d'autorisation sont transmis avec le signal de mise en attente par les moyens de régulation du système cible 1 au système requérant 2 qui mémorise l'identifiant de manière à pouvoir le représenter au système cible 1 après que le critère d'autorisation d'accès a été traité.

L'élément d'identification unique et l'adresse IP du système requérant compris dans l'identifiant permettent de lier chaque identifiant au système informatique requérant et d'éviter une éventuelle reproduction d'un même identifiant.

L'adresse IP du système requérant étant transmise par ailleurs de par la nature même des échanges réseau entre le système requérant 2 et le système cible 1, elle pourra ne pas être répétée explicitement dans l'identifiant, tout en en faisant implicitement partie.

La signature électronique comprise dans l'identifiant permet d'attester de l'authenticité de l'identifiant, et notamment de la date et l'heure indiquées. La signature électronique peut consister en un procédé cryptographique, avec une clef publique ou secrète, ou en un condensé comprenant un élément secret.

Dans ce mode de réalisation, le système cible 1 ne conserve aucun identifiant en mémoire.

Le critère d'autorisation comprend un temps d'attente et un défi informatique que le système requérant 2 doit résoudre durant la mise en attente.

Le temps d'attente est déterminé par les moyens de régulation 5 du système cible 1 en mesurant le débit de sortie effectif de la file d'attente au niveau des moyens de régulation 5 et en le comparant à la consigne de débit.

Le temps d'attente est régulé de manière heuristique en l'augmentant linéairement lorsque le débit de sortie effectif est supérieur à la consigne de débit, ce qui signifie que la durée d'attente est insuffisante. Le temps d'attente est à contrario diminué exponentiellement lorsque le débit de sortie effectif est inférieur à la consigne de débit, ce qui signifie que la durée d'attente est excessive.

Alternativement, cette régulation du temps d'attente est couplée à une régulation de type Proportionnel Intégral ou Proportionnel Intégral Dérivé.

La résolution d'un défi informatique par le système requérant 2 permet d'immuniser le procédé de gestion de la file d'attente au spam. Des entités fictives peuvent en effet être créées accidentellement ou bien volontairement, par malveillance, entraînant un spam du système informatique mettant en oeuvre le procédé de gestion de la file d'attente.

La résolution d'un défi par le système informatique 2 requérant l'accès au système informatique cible 1 permet d'immuniser au spam le procédé de gestion de file d'attente selon l'invention.

Le défi informatique consiste en un problème à résoudre par le système informatique requérant 2 pendant la mise en attente. Le critère d'autorisation d'accès reste invalidé tant que le défi informatique n'est pas résolu par le système requérant 2.

Le défi peut être comparé à une grille de mots croisés à résoudre pendant une mise en attente. Le défi informatique généré par le système cible 1, et plus particulièrement dans ce mode de réalisation par les moyens de régulation 5 du système cible 1, nécessite une charge de calcul importante de la part du système requérant 2.

Dans une étape 15, le système requérant 2 est ainsi mis en attente. Dans ce mode de réalisation et de mise en oeuvre, la mise en attente est gérée par un script transmis par un système de mise en attente 3, ou système de garage. Le signal de mise en attente transmis par les moyens de régulation 5 du système cible 1 comprend une redirection du système requérant 2 vers le système de mise en attente 3 qui transmet alors au système requérant le script comportant les lignes de codes permettant la mise en oeuvre d'un procédé de mise en attente sur le système requérant 2.

Dans une variante, le script peut déjà être chargé dans le système requérant 2, le procédé de gestion de file d'attente ne nécessitant pas dans ce cas la redirection et la communication avec le système de mise en attente 3.

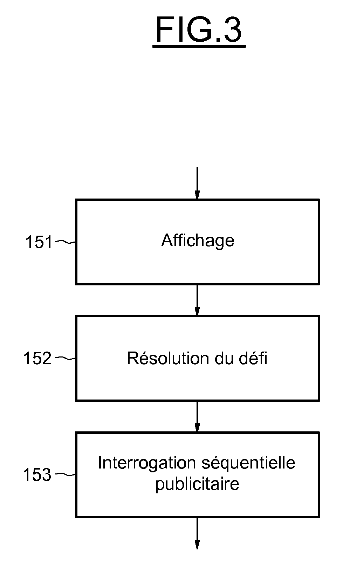

La figure 3 détaille l'étape 15 de mise en attente. A la réception du script par le système requérant 2, le script génère l'affichage d'une page d'attente dans une étape 151. La page d'affichage à afficher est émise par le système de mise en attente 3 dans l'exemple illustré.

En même temps, le système requérant réalise, dans une étape 152 le traitement automatique du défi informatique. Le calcul pour résoudre le défi est ainsi effectué automatiquement par le script. Le calcul est tronçonné en autant de fragments qu'il est nécessaire pour conserver la fluidité et la réactivité de la page d'attente affichée. Au besoin, si le navigateur du système requérant 2 permettant la génération de la page d'attente applique un quota de temps d'exécution de script, ces tronçons de calcul sont ordonnancés par appel périodique de la fonction de calcul.

La résolution du défi se produit ainsi de manière transparente pour le client, ou internaute, et n'interfère pas avec l'animation de la mise en attente.

La charge de calcul requise pour résoudre le défi bien que représentant plusieurs dizaines de secondes de processeur, est indolore pour le système requérant 2 qui attend vraiment l'autorisation d'accès au système cible 1. En effet, au lieu de ne rien faire d'autre pendant la mise en attente que d'afficher la page d'attente, le navigateur du système requérant 2 exécute des calculs pour résoudre le défi.

En revanche, pour un système requérant ayant pour objectif de « spammer » le système cible 1 et de provoquer un bourrage de liste et qui met en attente des milliers d'entité fictives par seconde, cette charge de calcul est prohibitive. Il ne peut pas bourrer la file d'attente avec des milliers d'entités fictives par seconde et remplir le défi de chacune, sauf à disposer de dizaines de milliers de processeurs en parallèle. C'est ce qui rend son action de bourrage de file d'attente inopérante et rend la file immunisée au spam.

Un défi informatique peut consister en la résolution du problème suivant. Déterminer quatre caractères, notés XXXX, parmi un jeu de 64 caractères fixé, de sorte que le condensé du message composé de XXXX suivi du contenu du reste de l'élément d'identification commence par 20 bits à zéro.

Ainsi, il faut en moyenne 2²⁰, soit environ 1 million, d'itérations de calcul pour résoudre le problème, ce qui sur un ordinateur de bureau ou sur un terminal mobile moderne et selon les meilleures implémentations logicielles dans un navigateur Internet nécessite une trentaine de secondes de calcul.

L'affichage de la page d'attente permet de réaliser simultanément à la résolution du défi, dans une étape 153, une animation de la mise en attente du client qui consiste à mettre à profit ce moment d'attente, où l'internaute doit surveiller si elle est terminée ou non, pour afficher un ou plusieurs messages d'information, fixes ou animés avec des images, des vidéos, du son et/ou d'autres multimédia. Ces messages ont une durée fixe ou variable et sont enchaînés automatiquement sans intervention de l'internaute.

Ces messages peuvent être directement liés à l'attente, ou proposer des solutions alternatives à l'attente, ou de nature commerciale pour compte propre ou de pure publicité, ou servir un autre objectif de communication. Le ou les encarts où sont affichés ces messages sont cliquables, permettant d'accéder à une page, ouverte en plus de la page d'attente, choisie par l'annonceur, le diffuseur du message. L'objectif de l'animation est de capter l'attention du client internaute, de préserver sa motivation à accéder à ce qui se trouve au bout de l'attente et de raccourcir sa perception de la durée d'attente.

Cette animation est établie en envoyant pendant la durée de la mise en attente les messages à afficher sur la page d'attente du navigateur du système requérant depuis un système informatique publicitaire 4 tel qu'un serveur publicitaire par un canal de communication entre la page d'attente et ce serveur.

Le serveur publicitaire 4 peut être distinct du serveur de mise en attente 3 et/ou du serveur cible 1, ou bien confondu. Il peut être opéré par le site internet mis en oeuvre par le système cible 1 ou par un tiers.

Les échanges de données informatiques consistent à communiquer à la page d'attente le message à afficher ou des instructions prescrivant le message à afficher ainsi que la durée d'affichage. La page d'attente affichée sur le système requérant 2 informe également le serveur publicitaire 4 lorsqu'un message a été complètement affiché, permettant ainsi de détecter les abandons prématurés dus à une fermeture de la page, du navigateur ou autre.

Dans une étape suivante 16, le système requérant 2 détecte la satisfaction du critère d'autorisation, à savoir la résolution du défi informatique et l'expiration du temps d'attente défini initialement par les moyens de régulation 5 du système cible 1. Tant que le critère d'autorisation d'accès n'est pas satisfait, c'est-à-dire tant que le défi n'est pas résolu et/ou que le temps d'attente n'a pas expiré, la mise en attente à l'étape 15 est prolongée.

Une fois le critère d'autorisation satisfait, il est mis fin à la mise en attente sans aucune intervention de l'internaute et le système requérant 2 renvoie au système cible 1 les données, à savoir dans cet exemple une requête d'accès à la page internet, accompagnées de l'identifiant et du critère d'autorisation satisfait.

Les moyens de régulations 5 du système cible vérifient alors, dans une étape 18, que le critère d'autorisation a bien été satisfait, d'une part, et que l'identifiant est correct, d'autre part.

Si le critère d'autorisation n'est pas satisfait ou que l'identifiant n'est pas reconnu, la requête d'autorisation est refusée dans une étape 19, car elle provient d'une source inconnue par exemple.

En revanche, si le critère d'autorisation est bien satisfait, dans ce mode de réalisation et de mise en oeuvre, à la réception de cette nouvelle requête, les moyens de régulation 5 du système cible 1 déterminent, dans une étape 20, un nouveau temps de mise en attente.

Ce nouveau temps de mise en attente est comparé au temps d'attente effectif total que le système requérant a déjà attendu. Le temps d'attente effectif est déterminé à partir de la date et de l'heure indiqués dans l'identifiant.

Si le nouveau temps de mise en attente est inférieur au temps d'attente effectif, les moyens de régulation 5 du système cible 1 émettent, dans une étape 21, un signal d'autorisation d'accès au système cible 1 qui transfert le système requérant 2 vers le système cible 1 et autorise la requête d'accès du système requérant 2 au système cible 1 et le traitement des données.

Si en revanche le temps d'attente a augmenté entre-temps et que le nouveau temps d'attente est supérieur au temps d'attente précédent, on recommence à partir l'étape 14 avec un nouveau temps d'attente pour le critère d'autorisation équivalant à la différence entre le nouveau temps de mise en attente et le temps d'attente effectif correspondant écoulé depuis l'horodatage indiqué par l'identifiant.

Ceci permet ainsi de prolonger la mise en attente d'un système requérant 2 lorsque l'accès au système cible 1 ne peut pas encore être autorisé.

Ainsi le temps d'attente exigé ne change pas quel que soit le nombre d'entités fictives essayant de bourrer la file d'attente.

Dans ce mode de réalisation, le renvoi à l'étape 14 est réalisé sans nouveau défi informatique à résoudre, le signal de renvoi comprenant le défi informatique résolu.

Dans ce synoptique illustré sur les figures 2 et 3, le procédé de mise en attente, mis en oeuvre au cours du procédé de gestion de file d'attente, comprend les étapes 15 à 17 de la figure 2, l'étape 15 comprenant les étapes 151 à 153 illustrées sur la figure 3.

Ainsi le procédé de gestion de file d'attente permet d'accorder ou non la sortie de la file d'attente en fonction seulement de l'ancienneté dans la file d'attente, indiquée par la date et l'heure dans l'élément d'identification. Ainsi, le respect de l'ordre d'arrivée n'est pas garanti de manière absolue, mais l'est en moyenne. A un instant t donné, si deux entités arrivées à des moments *t₁* et *t₂, t₂* étant postérieur à *t₁,* demandent à sortir de la file, l'entité arrivée à l'instant *t₁* a plus de chances d'obtenir une autorisation d'accès que l'entité arrivée à l'instant *t₂* postérieur à *t₁.* Comme nul ne connaît sa propre position dans la file d'attente ni celle des autres, les cas où l'équité n'est pas respectée ne posent pas de problème à ceux qui sont lésés.

Le système de mise en attente décide d'accorder ou non l'autorisation d'accès au système cible en maintenant et en mettant à jour une estimation du temps qu'il aura fallu attendre.

Le procédé de gestion de file d'attente de données peut également être appliqué dans le domaine des télécommunications à la régulation du trafic entrant dans un routeur, par exemple.

Dans un tel cas, explicité ci-dessous, le système requérant correspond alors à un équipement réseau terminal, comme un ordinateur, générant des paquets de données réseau à router, éventuellement assisté d'un équipement intermédiaire relayant ces données. Ce système requérant est ci-après dénommé « la source ».

Le système cible est le routeur, éventuellement assisté d'un dispositif de régulation à qui cette fonction est confiée. Ce système cible est ci-après dénommé « le routeur ». Les données émises par la source vers le routeur correspondent alors à un paquet de données réseau à router.

Lorsqu'un paquet réseau ne peut être traité immédiatement par le routeur, le routeur émet vers la source en un unique paquet de données réseau un signal de mise en attente comprenant le paquet de données réseau mis en attente, un critère d'autorisation associé au paquet de données réseau, et un identifiant comprenant un horodatage de la requête initiale, un élément d'identification unique et une signature électronique.

Puis, la source effectue les actions nécessaires pour remplir le critère d'autorisation qui comprend l'attente d'un délai prescrit déterminé comme décrit dans l'exemple précédent, et la résolution d'un défi.

Puis, la source renvoie le paquet de données réseau en y ajoutant l'identifiant fourni et la solution du défi proposé.

Le routeur vérifie alors, d'une part, que l'identifiant présenté n'est pas falsifié à partir de sa signature électronique, et, d'autre part, qu'il n'est pas réutilisé grâce à l'adresse IP (Internet Protocol) de la source et à l'échantillon aléatoire des derniers identifiants utilisés, et si la requête est ainsi invalide, elle est définitivement rejetée.

Par la suite, le routeur vérifie la solution du défi et si elle est incorrecte, il renvoie le paquet de données réseau pour un délai d'attente complémentaire.

Le routeur détermine à nouveau le temps d'attente prescrit comme décrit précédemment, puis si l'attente totale du paquet de données réseau (y compris les renvois en attente éventuels) dépasse ce temps, le routeur accepte le paquet réseau.

Sinon, si l'attente totale de la requête ne dépasse pas ce temps, le routeur retransmet le paquet de données réseau vers la source avec un nouveau délai d'attente prescrit.

Dans ce mode de mise en oeuvre il est possible d'inclure dans le critère d'autorisation du renvoi en attente initial un délai d'attente prescrit, ou bien de l'omettre, le temps nécessaire pour résoudre le défi proposé pouvant suffire. Cette inclusion diminue la probabilité d'un deuxième renvoi en attente à l'issue de cette attente initiale,

Il est également possible d'inclure dans le critère d'autorisation un défi à résoudre, cette inclusion permettant de différentier les requêtes légitimes des requêtes artificielles ou spam.

L'identifiant peut également comprendre un identifiant unique, cette unicité étant un pré-requis nécessaire pour détecter les réutilisations d'éléments d'identification, deux requêtes distinctes pouvant avoir le même horodatage.

L'identifiant peut également comprendre dans ce mode de mise en oeuvre du procédé de gestion de file d'attente de données, une signature électronique, de manière à permettre la détection d'éventuelles falsifications des éléments d'identifications, et notamment de leur horodatage,

En outre, la signature électronique peut inclure un élément propre au système source telle son adresse IP, cette inclusion permettant de détecter les réutilisations d'identifiants dans le cas particulier où un système requérant réutilise un identifiant appartenant à un autre système requérant.

Il est également possible que le système cible conserve un échantillon aléatoire de certains des derniers identifiants utilisés, cette conservation permettant de détecter les réutilisations d'éléments d'identification.

De plus, dans ce mode particulier de mise en oeuvre, le renvoi du paquet de données réseau avec le signal de mise en attente est avantageux bien qu'optionnel, ce renvoi évitant à la source d'avoir à maintenir en mémoire le paquet de données réseau dans l'attente éventuelle de ce signal en retour, ce qui est particulièrement avantageux dans le domaine des télécommunications.

## Revendications

1. Procédé de mise en attente d'un traitement de données par un système de traitement de données cible (1) jusqu'à ce qu'un critère d'autorisation défini par le système cible (1) soit satisfait, le procédé étant destiné à être mis en oeuvre sur un système de traitement de données requérant (2) ayant émis les données à traiter par le système cible (1), **caractérisé en ce que** le système requérant (2) émet à nouveau lesdites données vers le système cible (1) une fois le critère d'autorisation satisfait.

2. Procédé selon la revendication 1, dans lequel le critère d'autorisation comprend un temps d'attente.

3. Procédé selon l'une des revendications 1 ou 2, dans lequel le critère d'autorisation comprend la résolution d'un défi informatique par le système requérant (2).

4. Procédé selon l'une des revendications 1 à 3, dans lequel le système requérant (2) affiche une page d'attente jusqu'à ce que le critère d'autorisation soit satisfait.

5. Procédé selon la revendication 4, dans lequel l'affichage d'une page d'attente comprend un chargement périodique de messages.

6. Procédé selon l'une des revendications 4 ou 5, dans lequel la page d'attente affiche des éléments comprenant des messages publicitaires fournis par un système informatique publicitaire (4).

7. Procédé de gestion d'une file d'attente de données émises par un système de traitement de données requérant (2) vers un système de traitement de données cible (1), comprenant, à la suite de l'émission des données aptes à être ajoutées à la file d'attente :
- une transmission par le système cible (1) d'un signal de mise en attente comprenant un critère d'autorisation à satisfaire défini par le système cible (1), le signal de mise en attente étant apte à commander l'exécution d'un procédé de mise en attente selon l'une des revendications 1 à 6,
- une mise en oeuvre dudit procédé de mise en attente par le système requérant (2) à partir de la réception du signal de mise en attente jusqu'à ce que le critère d'autorisation soit satisfait,
- un traitement par le système cible (1) des données émises par le système requérant (2) une fois le critère d'autorisation satisfait.

8. Procédé selon la revendication 7, dans lequel, avant ladite transmission, le système cible (1) génère un identifiant transmis avec le signal de mise en attente et destiné à être mémorisé par le système requérant (2) et renvoyé par le système requérant lors de la réémission des données.

9. Procédé selon l'une des revendications 7 ou 8, dans lequel l'identifiant comprend un élément horodaté.

10. Procédé selon l'une des revendications 8 ou 9, dans lequel, lorsque le critère d'autorisation est satisfait, le système cible (1) vérifie l'identifiant des données réémises par le système requérant (2) et la satisfaction du critère d'autorisation, le système cible (1) traitant les données réémises par le système requérant (2) si le critère d'autorisation est satisfait et si l'identifiant vérifié correspond à un identifiant généré et transmis initialement par le système cible (1).

11. Procédé selon l'une des revendications 7 à 10, dans lequel le critère d'autorisation comprend un temps d'attente déterminé et adapté en comparant le débit ou la vitesse de sortie effective de la file d'attente des données à la consigne respectivement de débit ou de vitesse de sortie de la file d'attente des données.

12. Procédé selon les revendications 9 à 11, dans lequel, entre la vérification de l'identifiant et du critère d'autorisation par le système cible (1) et le traitement des données par le système cible (1), on réalise les étapes suivantes :
a) le système cible (1) détermine un nouveau temps d'attente,
b) si le nouveau temps d'attente est inférieur au temps d'attente effectif correspondant au temps écoulé depuis l'horodatage, le système cible (1) traite les données émises par le système requérant (2),
c) sinon on renvoie les données au système requérant (2) avec un signal d'attente comportant un temps d'attente équivalant à la différence entre le nouveau temps d'attente calculé à l'étape a) et le temps d'attente effectif.

13. Procédé selon l'une des revendications 7 à 12, dans lequel le critère d'autorisation comprend un défi informatique à résoudre par le système requérant (2), le système requérant (2) transmettant en outre, une fois le critère d'autorisation satisfait, la solution du défi informatique déterminée au système cible (1), et la vérification par le système cible (1) que le critère d'autorisation est satisfait comprenant la vérification de la résolution du défi informatique.

14. Procédé selon l'une des revendications 8 à 13, dans lequel l'identifiant comprend en outre un élément d'identification unique et/ou un élément propre au système requérant (2).

15. Procédé selon l'une des revendications 8 à 14, dans lequel l'identifiant comprend en outre une signature électronique dépendant des éléments constituant l'identifiant.

16. Procédé selon l'une des revendications 8 à 15, dans lequel le système cible (1) conserve un échantillon de taille limitée des derniers identifiants utilisés ou d'un choix aléatoire parmi les identifiants utilisés.

17. Procédé selon l'une des revendications 7 à 16, dans lequel les étapes réalisées par le système cible (1) différentes du traitement des données par le système cible (1) sont mises en oeuvre par des moyens de régulation (5) disposés en entrée du système cible (1).

18. Procédé selon l'une des revendications 7 à 17, dans lequel le signal de mise en attente comprend une redirection du système requérant (2) vers un système auxiliaire (3) qui transmet au système requérant (2) un programme informatique comprenant des portions de codes de logiciel pour l'exécution dudit procédé de mise en attente.

19. Procédé selon la revendication 9 et l'une des revendications 11 à 18, dans lequel le critère d'autorisation comprend en outre un ajustement stochastique selon l'expression mathématique :
Si, alors que le temps d'attente est suffisant, *x〉e^{-K(A-T)}* alors l'autorisation d'accès peut être acceptée, sinon la requête est remise en attente pour un nouveau temps d'attente, avec « x » un nombre pseudo-aléatoire compris dans l'intervalle [0;1[, *« K »* une constante, « *A »* le temps d'attente effectif dans la file d'attente correspondant au temps écoulé depuis l'horodatage, et « *T* » ledit temps d'attente déterminé.

20. Système informatique comprenant des moyens configurés pour mettre en oeuvre le procédé selon l'une des revendications 1 à 6.

21. Produit programme d'ordinateur chargeable directement dans une mémoire d'un système informatique, comprenant des portions de code de logiciel pour l'exécution du procédé selon l'une des revendications 1 à 6 lorsque ledit programme est exécuté sur ledit système informatique.

22. Système informatique comprenant des moyens configurés pour mettre en oeuvre le procédé selon l'une des revendications 7 à 19.

23. Produit programme d'ordinateur chargeable directement dans une mémoire d'un système informatique, comprenant des portions de code de logiciel pour l'exécution du procédé selon l'une des revendications 7 à 19 lorsque ledit programme est exécuté sur ledit système informatique.

24. Support lisible par un système informatique, ayant des instructions exécutables par ordinateur adaptées pour provoquer l'exécution par le système informatique du procédé selon l'une des revendications 7 à 19.
